# EUROPÄISCHE PATENTSCHRIFT

(11) **EP 3 405 081 B1**
(45) Veröffentlichungstag und Bekanntmachung des Hinweises auf die Patenterteilung: **06.01.2021**
(21) Anmeldenummer: 17701061.8
(22) Anmeldetag: 11.01.2017
(51) Int. Cl.: A47J 44/00, A01G 9/00

(54) **GERÄT ZUR HERSTELLUNG EINES NAHRUNGSMITTELS**
APPARATUS FOR PRODUCING A FOOD ITEM
APPAREIL SERVANT À FABRIQUER UN PRODUIT ALIMENTAIRE

(30) Priorität: 22.01.2016 DE 102016200872
(43) Veröffentlichungstag der Anmeldung: 28.11.2018
(73) Patentinhaber: BSH Hausgeräte GmbH, 81739 München (DE)
(72) Erfinder: BUI TRAN, Duc Hanh, 81247 München (DE); KORDT, Erik, 80686 München (DE); SCHUSTER, Lucia, 70173 Stuttgart (DE)
(86) Internationale Anmeldenummer: PCT/EP2017/050484
(87) Internationale Veröffentlichungsnummer: WO 2017/125296

(56) Entgegenhaltungen:
- WO-A1-2014/190217
- US-A1- 2013 101 714
- US-A1- 2015 290 795

## Beschreibung

Die Erfindung betrifft ein Gerät zur automatischen Herstellung eines Nahrungsmittels.

Verbraucher haben steigende Anforderungen in Bezug auf die Qualität der Nahrungsmittel, die sie konsumieren. Des Weiteren besteht ein steigender Bedarf daran, Nahrungsmittel in einfacher und zuverlässiger Weise an persönliche Anforderungen bzw. Bedürfnisse anpassen zu können. Das vorliegende Dokument befasst sich mit der technischen Aufgabe, ein Gerät bereitzustellen, welches es einem Nutzer ermöglicht, qualitativ hochwertige, personalisierte Nahrungsmittel herzustellen. Aus dem Stand der Technik sind derartige Geräte bekannt. Beispielsweise zeigt die US 2013/101714 einen Kochautomaten, welcher über Zutatenspeicher und Manipulatoren verfügt sowie ein optionales Treibhausmodul zum Anbau und zur Ernte von Pflanzen. WO 2014/190217 zeigt einen 3D Nahrungsmittel-Drucker für Weltraummissionen. US 2015/290795 zeigt eine automatisierte Küche mit Manipulatoren.

Die Aufgabe wird durch den Gegenstand des unabhängigen Patentanspruchs gelöst. Vorteilhafte und fakultative Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Gerät zur Herstellung eines Nahrungsmittels (z.B. eines gegarten Nahrungsmittels) beschrieben. Das Gerät kann ein Hausgerät bzw. ein Haushaltsgerät, insbesondere für die Küche eines Haushalts, sein.

Das Gerät umfasst eine Anbaukomponente zum Anbau und zur Bereitstellung einer essbaren angebauten Zutat. Mit anderen Worten kann in der Anbaukomponente des Gerätes eine essbare Zutat gezüchtet bzw. angebaut werden. Ein Beispiel für eine in dem Gerät angebaute Zutat ist Khai-Nam (botanischer Name Wolffia arrhiza, wurzellose Zwergwasserlinse). Die in dem Gerät angebauten ein oder mehreren Zutaten können ggf. die Hauptkomponente für ein mit dem Gerät hergestelltes Nahrungsmittel darstellen. Insbesondere kann ein durch das Gerät hergestelltes Nahrungsmittel zu mehr als 50%, insbesondere zu mehr als 80%, aus ein oder mehreren angebauten Zutaten bestehen, die in dem Gerät angebaut wurden.

Das Gerät umfasst weiter Mittel zur Bereitstellung einer essbaren externen Zutat, die nicht in dem Gerät angebaut wird. Als externe Zutaten können insbesondere Zusatzstoffe wie z.B. Farbstoffe, Gewürze, Süßstoffe, Vitamine, Mineralstoffe, Fette, Öle, Texturierungsmittel und/oder Verdickungsmittel bereitgestellt werden. Alternativ oder ergänzend können die externen Zutaten nicht-pflanzliche Zutaten (z.B. Fleisch) umfassen. Die externe Zutat kann einen festen (ggf. verformbaren) Zustand aufweisen. Insbesondere kann sich die externe Zutat von reinem Wasser unterscheiden.

Des Weiteren umfasst das Gerät Verarbeitungsmittel, die eingerichtet sind, aus zumindest einer angebauten Zutat und aus zumindest einer externen Zutat ein Nahrungsmittel herzustellen. Insbesondere können dabei zumindest eine angebaute Zutat und zumindest eine externe Zutat jeweils dosiert und vermischt werden, und ggf. als verformbare und/oder zähe Druckmasse bereitgestellt werden.

Außerdem umfasst das Gerät eine Steuereinheit, die eingerichtet ist, ein Rezept für die Herstellung eines ersten Nahrungsmittels zu ermitteln, wobei das Rezept (angebaute und/oder externe) Zutaten und Prozessschritte für die Herstellung des ersten Nahrungsmittels anzeigt. Die Steuereinheit ist weiter eingerichtet, die Verarbeitungsmittel zu veranlassen, das erste Nahrungsmittel gemäß dem Rezept aus zumindest einer angebauten Zutat und ggf. zumindest einer externen Zutat herzustellen.

Das Gerät ermöglicht es somit, den gesamten Herstellungsprozess eines Nahrungsmittels (vom Anbau bis zum Garprozess) zu kontrollieren. So kann die Qualität eines Nahrungsmittels in zuverlässiger Weise gewährleistet werden. Außerdem wird durch die individuelle Verarbeitung der Zutaten zur Herstellung des Nahrungsmittels eine effiziente Individualisierung von Nahrungsmitteln ermöglicht.

Die Anbaukomponente umfasst typischerweise einen Anbaubereich, in dem die angebaute Zutat wachsen kann. Dabei kann der Anbau erfindungsgemäß auf flüssigen Medium erfolgen (z.B. in einem Nährboden oder in einer Nährflüssigkeit). Die Anbaukomponente kann weiter eine Lichtquelle (z.B. eine LED-basierte Lichtquelle) umfassen, die eingerichtet ist, Licht zur Photosynthese der angebauten Zutat im Anbaubereich bereitzustellen. Alternativ oder ergänzend kann die Anbaukomponente eine Klimaeinheit umfassen, die eingerichtet ist, ein Klima, insbesondere eine Temperatur und/oder eine Zusammensetzung eines Gases (z.B. Sauerstoff, Kohlendioxid, etc.), im Anbaubereich einzustellen (z.B. zu steuern und/oder zu regeln). Des Weiteren kann die Anbaukomponente eine Nährstoffquelle (z.B. für Dünger) umfassen, um Nährstoffe für das Wachstum der angebauten Zutat bereitzustellen. Der Anbauprozess und insbesondere die Lichtquelle, die Klimaeinheit und/oder die Nährstoffquelle können durch die Steuereinheit des Geräts gesteuert werden. So kann die zumindest eine angebaute Zutat in zuverlässiger und kontinuierlicher Weise im Gerät bereitgestellt werden.

Die Anbaukomponente umfasst ein Erntemodul das eingerichtet ist, einen reifen Anteil der angebauten Zutat aus dem Anbaubereich zu entnehmen. Erfindungsgemäß wird über die Größe erkannt, welcher Teil der angebauten Zutat im Anbaubereich reif ist. Dieser Teil kann dann selektiv (z.B. durch eine Filter oder durch eine Greifarm) aus dem Anbaubereich entnommen werden. Alternativ oder ergänzend können unterschiedliche Teilbereiche des Anbaubereichs unterschiedlich reife angebaute Zutaten aufweisen, so dass die Auswahl des reifen Anteils der angebauten Zutat über die Auswahl eines bestimmten Teilbereichs des Anbaubereichs erfolgen kann.

Die Steuereinheit kann eingerichtet sein, das Erntemodul zu steuern, um eine im Rezept angezeigte Menge der angebauten Zutat für die Herstellung des ersten Nahrungsmittels aus dem Anbaubereich zu entnehmen. Anderweitig kann die angebaute Zutat in dem Anbaubereich verbleiben und wird so weiter frisch gehalten. Die selektive Ernte von Teilen einer im Gerät angebauten Zutat für die Herstellung eines Nahrungsmittels führt zu einer weiteren Erhöhung der Qualität des hergestellten Nahrungsmittels.

Die Verarbeitungsmittel können eine Mischeinheit umfassen, die eingerichtet ist, aus der zumindest einen angebauten Zutat und aus der zumindest einen externen Zutat eine essbare Druckmasse zu erzeugen. Die Druckmasse kann für den Verzehr an einer Öffnung bzw. über eine Düse des Geräts ausgegeben werden.

Die Verarbeitungsmittel können eine Düse umfassen, um die Druckmasse zu extrudieren. Die Düse kann dabei beweglich sein und kann eingerichtet sein, die Druckmasse an unterschiedlichen Positionen (z.B. auf einer Ablage) auszutreiben, um eine räumliche Anordnung von Druckmasse für ein Nahrungsmittel herzustellen. Beispielsweise kann das Rezept ein oder mehrere erste Positionen anzeigen, an denen Druckmasse in der räumlichen Anordnung von Druckmasse zur Herstellung des ersten Nahrungsmittels anzuord nen ist. Die Steuereinheit kann eingerichtet sein, die bewegliche Düse zu veranlassen, die Druckmasse an den ein oder mehreren ersten Positionen in der räumlichen Anordnung von Druckmasse auszutreiben. So können komplexe Nahrungsmittel in automatischer Weise hergestellt werden.

Die Verarbeitungsmittel können eine Gareinheit umfassen, die eingerichtet ist, die Druckmasse zu garen, um ein Nahrungsmittel herzustellen. Die Gareinheit kann insbesondere eingerichtet sein, zu backen, zu grillen, zu braten, zu erhitzen, zu trocknen, zu dünsten, und/oder mit Wasser zu kochen. Insbesondere kann die Gareinheit eingerichtet sein, eine Vielzahl von unterschiedlichen Garverfahren auf die räumliche Anordnung von Druckmasse anzuwenden. Beispielsweise kann die räumliche Anordnung von Druckmasse zumindest teilweise mit Wasser gekocht und zumindest teilweise gebraten werden. Somit können durch das Gerät komplex gegarte Nahrungsmittel hergestellt werden. Das Rezept kann eine Einstellung für die Gareinheit, insbesondere eine Gartemperatur und/oder eine Garzeit, anzeigen. Die Steuereinheit kann eingerichtet sein, die Gareinheit in Abhängigkeit von dem Rezept zu steuern. So kann ein automatisches Garen des Nahrungsmittels bewirkt werden.

Das Rezept kann erforderliche ein oder mehrere angebaute Zutaten und/oder erforderliche ein oder mehrere externe Zutaten anzeigen, die für die Herstellung des ersten Nahrungsmittels benötigt werden. Die Verarbeitungsmittel können Dosier-Mittel umfassen, um die Menge einer angebauten Zutat und/oder die Menge einer externen Zutat zu dosieren. Die Steuereinheit kann eingerichtet sein, die Dosier-Mittel gemäß dem Rezept zu steuern, um das erste Nahrungsmittel herzustellen. Durch die unterschiedliche Verwendung von Zutaten in unterschiedlichen Rezepten können in effizienter Weise unterschiedliche Nahrungsmittel hergestellt werden.

Die Mittel zur Bereitstellung einer essbaren externen Zutat können eine Schnittstelle zur Aufnahme einer Kapsel umfassen, wobei die Kapsel zumindest eine essbare externe Zutat umfasst. Ggf. kann durch die Kapsel automatisch ein Rezept für die Herstellung eines Nahrungsmittels angezeigt werden (z.B. über einen Code auf der Kapsel bzw. über eine äußere Erscheinungsform der Kapsel). Die Verwendung von Kapseln ermöglicht die zuverlässige und wiederholte Herstellung von Nahrungsmitteln mit gleichbleibender Qualität.

Alternativ oder ergänzend können die Mittel zur Bereitstellung einer essbaren externen Zutat einen Behälter im Gerät für die Aufnahme einer essbaren externen Zutat umfassen. Ggf. kann das Gerät einen Wasseranschluss für eine Wasserleitung in einem Haushalt eines Nutzers umfassen (zur Bereitstellung von Wasser als externe Zutat für ein Nahrungsmittel und/oder für die Bewässerung der Anbaukomponente zur Herstellung einer angebauten Zutat). Über Behälter und/oder Anschlüsse können in flexibler Weise unterschiedliche externe Zutaten für die Herstellung von unterschiedlichen Nahrungsmitteln bereitgestellt werden.

Das Gerät kann eine Benutzerschnittstelle umfassen, über die ein oder mehrere Parameter zur Herstellung des ersten Nahrungsmittels erfasst werden können. Desweiteren kann über die Benutzerschnittstelle die Auswahl eines Rezeptes erfolgen. Die Steuereinheit kann eingerichtet sein, das erste Nahrungsmittel in Abhängigkeit von den ein oder mehreren erfassten Parametern herzustellen. Durch das Erfassen von ein oder mehreren Parametern kann es einem Nutzer ermöglicht werden, ein hergestelltes Nahrungsmittel an persönliche Präferenzen anzupassen. Über die erfassten Parameter kann z.B. die Garzeit oder die Menge einer angebauten bzw. externen Zutat angepasst werden.

Die Steuereinheit kann eingerichtet sein, Information über einen Nutzer des Geräts zu ermitteln. Die Information über den Nutzer kann dabei insbesondere umfassen, Information über eine Präferenz des Nutzers, Information über einen Nährstoffbedarf des Nutzers und/oder Information über eine Nährstoffempfehlung für den Nutzer. Die Information über den Nutzer kann z.B. als ein Profil auf einer Speichereinheit des Geräts gespeichert sein. Die Steuereinheit kann eingerichtet sein, die Verarbeitungsmittel zu veranlassen, das erste Nahrungsmittel auch in Abhängigkeit von der Information über den Nutzer herzustellen.

Das Gerät kann eine (typischerweise verschließbare) Öffnung aufweisen, über die das erste Nahrungsmittel aus dem Gerät geführt werden kann. Beispielsweise kann das Gerät einen Transportmechanismus aufweisen, über den das gegarte Nahrungsmittel aus der Gareinheit heraus befördert wird. So kann ein komfortabler Zugang zu dem hergestellten Nahrungsmittel bereitgestellt werden.

Es ist zu beachten, dass jegliche Aspekte des in diesem Dokument beschriebenen Geräts in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigt

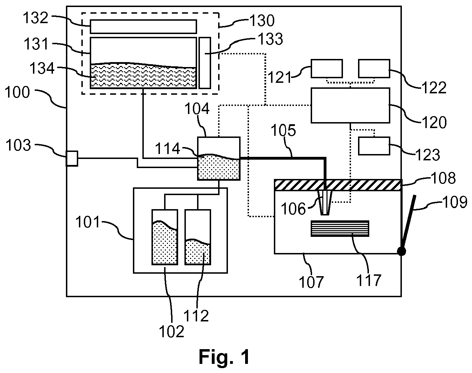

Figur 1 ein Blockdiagramm eines Geräts zur Herstellung eines Nahrungsmittels.

Wie eingangs dargelegt, befasst sich das vorliegende Dokument mit der automatischen Herstellung von qualitativ hochwertigen und personalisierten Nahrungsmitteln. Dabei können die Nahrungsmittel insbesondere individuell in Portionen für eine Einzelperson oder für eine kleine Gruppe von Personen (z.B. für eine vierköpfige Familie) hergestellt werden.

Fig. 1 zeigt ein Blockdiagramm eines beispielhaften Geräts 100 zur Herstellung eines Nahrungsmittels 117 (z.B. zur Herstellung eines kompletten gegarten Gerichts). Das Gerät 100 umfasst eine Anbaukomponente 130, die eingerichtet ist, zumindest eine Zutat 134 (insbesondere eine Pflanze) für ein Nahrungsmittel 117 anzubauen. Beispielhafte Zutaten 134 sind Gemüse, Sprossen, Obst, Khai-Nam, etc. Die Anbaukomponente 130 umfasst einen Anbaubereich 131, in dem die Zutat 134 z.B. auf einem Nährboden und/oder in einer Flüssigkeit angebaut werden kann. Des Weiteren umfasst die Anbaukomponente 130 eine Lichtquelle 132 (z.B. eine LED-basierte Lichtquelle) zur Unterstützung der Photosynthese für das Wachstum der angebauten Zutat 134. Außerdem umfasst die Anbaukomponente 130 eine Klimaeinheit 133, mit der das Klima (z.B. die Temperatur und/oder die Gas-Zusammensetzung in dem Anbaubereich 131) angepasst werden kann. Die Anbaukomponente 130 kann durch eine Steuereinheit 120 des Geräts 100 gesteuert werden.

Eine in der Anbaukomponente 130 angebaute Zutat 134 kann durch einen Erntemechanismus bzw. durch eine Ernteeinheit geentet werden. Beispielsweise können bei einem Anbau in Flüssigkeit reife Früchte / Pflanzen (z.B. Khai-Nam Erbsen) in Abhängigkeit von der Größe automatisch herausgefiltert werden, während unreife Früchte / Pflanzen weiterhin in dem Anbaubereich 131 verbleiben. Die geerntete Zutat 134 kann dann z.B. über eine Leitung in dosierter Weise in einen Mischeinheit 104 des Geräts 100 überführt werden, um daraus in automatischer Weise ein Nahrungsmittel 117 herzustellen. Durch die Verwendung von zumindest einer angebauten Zutat 134, die in dem Gerät 100 selbst angebaut wurde, kann die Qualität des daraus hergestellten Nahrungsmittels 117 gewährleistet werden.

Das Gerät 100 kann eine oder mehrere Schnittstellen 103 zur Bereitstellung von einer oder mehreren externen Zutaten 112 aufweisen. Alternativ oder ergänzend kann das Gerät 100 einen oder mehrere Behälter 102 zur Aufnahme von einer entsprechenden Anzahl von externen Zutaten 112 umfassen. Die ein oder mehreren Behälter 102 können in das Gerät 100 eingeführt werden (an dafür vorgesehene Positionen), und die ein oder mehreren Behälter 102 können bei Bedarf ausgetauscht werden. Die ein oder mehreren Behälter 102 können innerhalb des Geräts 100 in einer Temperierungseinheit 101 (z.B. in einem Kühlschrank) angeordnet sein. Durch die Temperierung eines Behälters 102 kann die Haltbarkeit der darin enthaltenen externen Zutat 112 verlängert werden.

Die essbaren, externen bzw. angebauten Zutaten 112, 134 können zumindest teilweise eine formbare Konsistenz aufweisen. Die essbaren Zutaten 112, 134 können z.B. zumindest teilweise in pürierter Form vorliegen. Des Weiteren können die Zutaten 112, 134 unterschiedliche Komponenten eines zu erstellenden Nahrungsmittels 117 umfassen. Beispielsweise können die externen Zutaten 112 in einem ersten Behälter 102 eine Fleischkomponente (z.B. Hackfleisch) umfassen. Andererseits können pflanzliche Zutaten, wie z.B. Kartoffeln, Gemüse, etc., durch die Anbaukomponente 130 bereitgestellt werden.

Die ein oder mehreren Behälter 102 und/oder Schnittstellen 103 können über Leitungen mit der Mischeinheit 104 verbunden sein. In der Mischeinheit 104 können ein oder mehrere der Zutaten 112, 134 gemischt werden, um eine Druckmasse 114 für die Herstellung des Nahrungsmittels 117 zu erzeugen. Die Druckmasse 114 kann über eine Leitung 105 zu einer Düse 106 befördert werden, wobei die Düse 106 eingerichtet ist, die Druckmasse 114 an bestimmten Positionen auszustoßen, um eine räumliche Anordnung von Druckmasse 114 zu erstellen. Beispielsweise können schichtweise unterschiedliche Druckmassen 114 ausgestoßen werden, um schichtweise eine räumliche Anordnung aus den unterschiedlichen Druckmassen 114 zu erstellen. Die Düse 106 kann zu diesem Zweck an einer Schiene 108 beweglich angeordnet sein, so dass die Düse 106 an unterschiedliche Positionen bewegt werden kann, und an unterschiedlichen Positionen Druckmasse 114 ausstoßen kann.

Die anhand der Druckmasse 114 hergestellte räumliche Anordnung kann durch eine Gareinheit 107 gegart werden, um ein fertig gegartes (z.B. ein gekochtes, gebackenes oder gebratenes) Nahrungsmittel 117 zu erstellen. Die Gareinheit 107 kann einen thermischen Ofen, einen Mikrowellenofen, eine Dünsteinheit, einen Grill, eine Pfanne und/oder einen Kochtopf umfassen. In dem in Fig. 1 dargestellten Beispiel wird die räumliche Anordnung von Druckmasse 114 direkt durch die Düse 106 innerhalb der Gareinheit 107 "gedruckt". Dies ist vorteilhaft, da so der Aufwand für den Transport der räumlichen Anordnung zu der Gareinheit 107 reduziert werden kann.

Das fertig gegarte Nahrungsmittel 117 kann über eine Ausgabe 109 des Geräts 100 an einen Nutzer ausgegeben werden. In dem dargestellten Beispiel umfasst die Gareinheit 107 eine Klappe 109, durch die ein Nutzer das Nahrungsmittel 117 aus der Gareinheit 107 entnehmen kann.

Das Gerät 100 umfasst eine Steuereinheit 120, die eingerichtet ist, ein Rezept für ein zu erstellenden Nahrungsmittel 117 zu ermitteln. Beispielsweise kann die Steuereinheit 120 dazu auf eine Rezept-Datenbank auf einer Speichereinheit 123 des Geräts 100 zugreifen. Alternativ oder ergänzend kann die Steuereinheit 120 über eine Kommunikationseinheit 121 auf eine externe Rezept-Datenbank zugreifen, die auf einem externen Server gespeichert ist. Die Kommunikationseinheit 121 kann eingerichtet sein, über ein drahtloses und/oder drahtgebundenes Netzwerk mit dem externen Server zu kommunizieren. Alternativ oder ergänzend kann das Rezept über eine Benutzerschnittstelle 122 (z.B. über einen berührungsempfindlichen Bildschirm) des Geräts 100 der Steuereinheit 120 bereitgestellt bzw. ausgewählt werden.

Die Steuereinheit 120 ist weiter eingerichtet, in Abhängigkeit von dem Rezept bestimmte Mengen von Zutaten 112, 134 (ggf. über die Mischeinheit 104 oder direkt) auf die räumliche Anordnung von Druckmasse 114 bzw. auf das herzustellende Nahrungsmittel 117 aufzubringen. Des Weiteren ist die Steuereinheit 120 eingerichtet, die Gareinheit 107 des Geräts 100 in Abhängigkeit von dem Rezept anzusteuern, um die räumliche Anordnung von Druckmasse 114 zumindest teilweise zu garen.

Es wird somit in diesem Dokument ein Gerät 100 beschrieben, das es ermöglicht, den gesamten Herstellungsprozess eines Nahrungsmittels 117 zu kontrollieren, vom Anbau zumindest einer Zutat 134 bis hin zu dem Garprozess des Nahrungsmittels 117. In einer Anbaukomponente 130 des Geräts 100 erfolgt der Anbau und ggf. die Fermentation, sowie die Ernte einer fischen Zutat 134 für das Nahrungsmittel 117. Anschließend kann die angebaute Zutat 134 ggf. mit anderen (externen) Zutaten 112 verarbeitet, portioniert und angerichtet werden, um ein essbares Nahrungsmittel 117 bereitzustellen. Durch die Kontrolle des gesamten Herstellungsprozesses können insbesondere der Geschmack, die Textur, die Farbe, der Geruch und/oder der Nährstoffgehalt eines Nahrungsmittels 117 beeinflusst werden. Dabei können personalisierte Gerichte mit unterschiedlicher Zusammensetzung für unterschiedliche Personen und/oder Profile hergestellt werden.

In der Anbaukomponente 130 des Geräts 100 erfolgt das Wachstum von Pflanzen zur Bereitstellung von zumindest einer angebauten Zutat 134 wie Gemüse, Sprossen, Khai-Nam, Obst etc. Die Anbaukomponente 130 kann eine Lichtquelle 132, eine Wasserquelle, bei Bedarf Nährboden, eine Quelle für unterschiedliche Gase wie z.B. Sauerstoff, Kohlendioxid, Stickstoff und/oder eine Düngerquelle umfassen. Des Weiteren kann die Anbaukomponente 130 eine mechanische Komponente umfassen, die einen Eingriff in das Ökosystem der Anbaukomponente 130 (z.B. eine Verändern des Ortes von Pflanzen im Anbaubereich 131) ermöglicht. Die Anbaukomponente 130 umfasst weiter eine Ernteeinheit zur Entnahme von verzehrfertiger Pflanzen 134 bzw. zur (automatischen/manuellen) Weitergabe von verzehrfertigen Pflanzen 134 an die weitere Verarbeitung im Gerät 100. Außerdem kann die Anbaukomponente 130 ein Qualitätssicherungsmodul umfassen, z.B. um die Pflanzengesundheit bzw. die Lebensmittelsicherheit zu überwachen. Zu diesem Zweck können z.B. chemische Messungen innerhalb der Anbaukomponente 130 durchgeführt werden.

Wie in Fig. 1 dargestellt kann das Gerät 100 zumindest eine Schnittstelle 103 zur Zugabe weiterer Zutaten 112 (z.B. zur Zugabe von Geschmacksstoffen, Nährstoffen, Texturierungsmitteln, Geruch beeinflussenden Lebensmitteln, etc.) umfassen. Die Schnittstelle 103 kann z.B. die Aufnahme einer Kapsel ermöglichen, wobei die Kapsel ein oder mehreren weitere Zutaten 112 zur Herstellung eines Nahrungsmittels 117 auf Basis der ein oder mehreren angebauten Zutaten 134 umfasst. Beispielsweise kann über die Anbaukomponente 130 eine Hauptkomponente als Zutät 134 für ein Nahrungsmittel 117 bereitgestellt werden. Über die externen Zutaten 112 (insbesondere über eine Kapsel) können dann Zusatzstoffe bereitgestellt werden, die eine Personalisierung des Nahrungsmittels 117 ermöglichen. Das hergestellte Nahrungsmittel 117 kann z.B. zu mehr als 50%, insbesondere zu mehr als 80%, aus ein oder mehreren im Gerät 100 angebauten Zutaten 134 bestehen.

Alternativ oder ergänzend zu der Bereitstellung von einer externen Zutat 112 über eine Schnittstelle 103 für Kapseln, kann eine externe Zutat 112 über einen Behälter bzw. über eine Kartusche 102 und/oder über eine Öffnung des Geräts 100 zugeführt werden. Die externen und/oder angebauten Zutaten 112, 134 können somit manuell oder automatisch für die Herstellung eines Nahrungsmittels 117 dosiert werden. Die Dosierung kann auf Basis eines gespeicherten Profils oder Rezeptes oder auf Basis einer persönlichen Auswahl erfolgen.

Das Gerät 100 umfasst weiter Verarbeitungsmittel 104, 106, 107, durch die auf Basis der frisch angebauten und der ggf. hinzugefügten externen Zutaten 112, 134 ein Nahrungsmittel 117 hergestellt werden kann. In den Verarbeitungsmitteln (insbesondere in der Mischeinheit 104) kann eine mechanische Verarbeitung der Zutaten 112, 134 (z.B. Kneten, Mischen, Rühren, Zerkleinern, Homogenisieren, etc.) erfolgen. Des Weiteren kann in den Verarbeitungsmitteln (insbesondere in der Gareinheit 107) eine thermische Verarbeitung (z.B. Dampfgaren, Kochen, Sous-Vide Garen, Backen, Grillen, Kühlen, Gefrieren, etc.) erfolgen. Außerdem kann eine Aufbereitung einer Mischung von Zutaten 112, 134 erfolgen (z.B. Eindicken, Verflüssigen, etc.), so dass die Mischung für eine Ausgabe (z.B. für den Druck über eine Düse 106) geeignet ist.

In der Mischeinheit 104 kann aus zumindest einer angebauten Zutat 134 und ggf. aus zumindest einer externen Zutat 112 eine Druckmasse 114 erzeugt werden, die über eine Düse 106 extrudiert werden kann. Dabei kann eine punktuelle Ausgabe der Druckmasse 114 durch eine statische Extrusionsdüse 106 erfolgen. Alternativ oder ergänzend kann eine Ausgabe in einer zweidimensionalen Ebene durch eine in der x-y-Ebene (parallel zu einer Oberfläche bzw. Ablagefläche) beweglichen Extrusionsdüse 106 erfolgen. Alternativ oder ergänzend können dreidimensionale Strukturen oder Anordnungen von Druckmasse 114 erstellt werden (z.B. durch fused deposition modelling, durch Strangguss, durch Spritzguss, durch In-Form-Pressen, etc.). Alternativ oder ergänzend kann eine direkt Ausgabe der Mischung aus Zutaten 112, 134 in einen Behälter, z.B. als Teig, Pulver, Brei, Flüssigkeit, Suppe, Klumpen, Eismasse oder Block, erfolgen.

Das Gerät 100 kann eine Benutzerschnittstelle 122, eine Steuereinheit 120 und/oder eine Kommunikationseinheit 121 umfassen. So kann z.B. auf Rezepte zur Herstellung eines Nahrungsmittels 117 zugegriffen werden. Des Weiteren können so Einstellungen für den automatisierten Ablauf des Zubereitungsprozesses eines Nahrungsmittels 117 festgelegt werden. Außerdem können dem Nutzer Rückmeldungen über den Gerätestatus, den Pflanzenstatus und/oder den Zubereitungsstatus gegeben werden. Das Gerät 100 kann weiter über die Kommunikationseinheit 121 mit einer Nutzer-Community verbunden sein. Außerdem können unterschiedliche Benutzerprofile angelegt und auf einer Speichereinheit 123 gespeichert werden. Des Weiteren kann eine Schnittstelle zu externen elektronischen Geräten (z.B. zu Smart Wearables, zu Smart Phones, zu Tablet PCs, etc.) bereitgestellt werden. Die Steuereinheit 120 kann die verfügbaren Informationen über einen Nutzer (z.B. Präferenzen, Ernährungsempfehlungen, Bewegungsinformation, Vitalwerte, spezielle Bedürfnisse, etc.) verarbeiten, um ein hergestelltes Nahrungsmittel 117 an die individuellen Bedürfnisses diese Nutzers anzupassen.

Das in diesem Dokument beschriebene Gerät 100 ermöglicht die volle Kontrolle über die Lebensmittelkette bei der Bereitstellung eines Nahrungsmittels 117. Insbesondere kann ein Nutzer mit dem Gerät 100 alle Schritte vom Anbau bis zur Zubereitung der Hauptbestandteile eines Nahrungsmittels 117 beeinflussen. Die Bereitstellung der unterschiedlichen funktionalen Komponenten für eine integrierte Herstellung in einem einzigen Gerät 100 führt zu Platzeinsparung, zu Vereinfachungen im Herstellungsprozess und zu Kosteneinsparungen. Des Weiteren kann der Arbeitsaufwand zur Herstellung eines Nahrungsmittels 117 reduziert werden (da insbesondere kein Kochen mehr erforderlich ist). Durch das Gerät 100 kann ein Nahrungsmittel 117 erzeugt werden, das personalisiert auf einen Nutzer angepasst ist (z.B. in Hinblick auf die Portionsgröße, auf den Nährstoffgehalt, auf den Geschmack, auf den Geruch, auf die Textur, etc.)

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Geräts veranschaulichen sollen.

## Patentansprüche

1. Gerät (100) zur Herstellung eines Nahrungsmittels (117), wobei das Gerät (100) umfasst:
- eine Anbaukomponente (130) zum Anbau und zur Bereitstellung einer essbaren angebauten Zutat (134), wobei die Anbaukomponente (130) einen Anbaubereich (131), in dem die angebaute Zutat (134) wachsen kann, und ein Erntemodul umfasst;
- Mittel (103, 112) zur Bereitstellung einer essbaren externen Zutat (112), die nicht in dem Gerät (100) angebaut wird;
- Verarbeitungsmittel (104, 106, 107), die eingerichtet sind, aus zumindest einer angebauten Zutat (134) und zumindest einer externen Zutat (112) das Nahrungsmittel (117) herzustellen; und
- eine Steuereinheit (120), die eingerichtet ist,
- ein Rezept für die Herstellung des Nahrungsmittels (117) zu ermitteln, wobei das Rezept Zutaten (112, 134) und Prozessschritte für die Herstellung des Nahrungsmittels (117) anzeigt;
- das Erntemodul zu steuern, um eine im Rezept angezeigte Menge der angebauten Zutat (134) für die Herstellung des Nahrungsmittels (117) aus dem Anbaubereich (131) zu entnehmen; und
- die Verarbeitungsmittel (104, 106, 107) zu veranlassen, das Nahrungsmittel (117) gemäß dem Rezept herzustellen;
**dadurch gekennzeichnet, dass**
- der Anbau der angebauten Zutat (134) in oder auf einem flüssigen Medium erfolgt und
- das Erntemodul dazu eingerichtet ist, einen reifen Anteil der angebauten Zutat (134) aus dem Anbaubereich (131) zu entnehmen, indem es Früchte bzw. Pflanzen der angebauten Zutat aus dem flüssigen Medium in Abhängigkeit von der Größe herausfiltert.

2. Gerät (100) gemäß Anspruch 1, wobei
- die Anbaukomponente (130) eine Lichtquelle (132) umfasst, die eingerichtet ist, Licht zur Photosynthese der angebauten Zutat (134) im Anbaubereich (131) bereitzustellen; und/oder
- die Anbaukomponente (130) eine Klimaeinheit (133) umfasst, die eingerichtet ist, ein Klima, insbesondere eine Temperatur und/oder eine Zusammensetzung eines Gases, im Anbaubereich (131) zu steuern und/oder zu regeln.

3. Gerät (100) gemäß einem der vorhergehenden Ansprüche, wobei die Anbaukomponente (130) eine Nährstoffquelle umfasst, um Nährstoffe für das Wachstum der angebauten Zutat (134) bereitzustellen.

4. Gerät (100) gemäß einem der vorhergehenden Ansprüche, wobei die Verarbeitungsmittel (104, 106, 107) eine Mischeinheit (104) umfassen, die eingerichtet ist, aus der zumindest einen angebauten Zutat (1.34) und aus der zumindest einen externen Zutat (112) eine essbare Druckmasse (114) zu erzeugen.

5. Gerät (100) gemäß Anspruch 4, wobei die Verarbeitungsmittel (104, 106, 107) eine Düse (106) umfassen, um die Druckmasse (114) zu extrudieren.

6. Gerät (100) gemäß Anspruch 5, wobei die Düse (106) beweglich ist und eingerichtet ist, die Druckmasse (114) an unterschiedlichen Positionen auszutreiben, um eine räumliche Anordnung von Druckmasse (114) für das Nahrungsmittel (117) herzustellen.

7. Gerät (100) gemäß Anspruch 6, wobei
- das Rezept ein oder mehrere erste Positionen anzeigt, an denen Druckmasse (114) in der räumlichen Anordnung von Druckmasse (114) zur Herstellung des Nahrungsmittels (117) anzuordnen ist; und
- die Steuereinheit (120) eingerichtet ist, die bewegliche Düse (106) zu veranlassen, die Druckmasse (114) an den ein oder mehreren ersten Positionen in der räumlichen Anordnung von Druckmasse (114) auszutreiben.

8. Gerät (100) gemäß einem der Ansprüche 4 bis 7, wobei die Verarbeitungsmittel (104, 106, 107) eine Gareinheit (107) umfassen, die eingerichtet ist, die Druckmasse (114) zu garen, um das Nahrungsmittel (117) herzustellen.

9. Gerät (100) gemäß einem der hervorgehenden Ansprüche, wobei
- das Rezept erforderliche ein oder mehrere angebaute Zutaten (134) und erforderliche ein oder mehrere externe Zutaten (112) anzeigt, die für die Herstellung des Nahrungsmittels (117) benötigt werden;
- die Verarbeitungsmittel (104, 106, 107) Dosier-Mittel umfassen, um die Menge einer angebauten Zutat (134) und/oder die Menge einer externen Zutat (112) zu dosieren; und
- die Steuereinheit (120) eingerichtet ist, die Dosier-Mittel gemäß dem Rezept zu steuern, um das Nahrungsmittel (117) herzustellen.

10. Gerät (100) gemäß einem der hervorgehenden Ansprüche, wobei
- die Mittel (103, 112) zur Bereitstellung einer essbaren externen Zutat (112) eine Schnittstelle (103) zur Aufnahme einer Kapsel umfassen; und
- die Kapsel zumindest eine essbare externe Zutat (112) umfasst.

11. Gerät (100) gemäß einem der hervorgehenden Ansprüche, wobei die Mittel (103, 112) zur Bereitstellung einer essbaren externen Zutat (112) einen Behälter (102) im Gerät (100) für die Aufnahme einer essbaren externen Zutat (112) umfassen.

12. Gerät (100) gemäß einem der hervorgehenden Ansprüche, wobei die angebaute Zutat (134) Khai-Nam umfasst.

13. Gerät (100) gemäß einem der hervorgehenden Ansprüche, wobei das Nahrungsmittel (117) zu mehr als 50%, insbesondere zu mehr als 80%, aus ein oder mehreren angebauten Zutaten (134) besteht, die in dem Gerät (100) angebaut wurden.

14. Gerät (100) gemäß einem der hervorgehenden Ansprüche, wobei
- die Steuereinheit (120) eingerichtet ist, Information über einen Nutzer des Geräts (100) zu ermitteln;
- die Information über den Nutzer insbesondere umfasst, Information über eine Präferenz des Nutzers, Information über einen Nährstoffbedarf des Nutzers und/oder Information über eine Nährstoffempfehlung für den Nutzer; und
- die Steuereinheit (120) eingerichtet ist, die Verarbeitungsmittel (104, 106, 107) zu veranlassen, das Nahrungsmittel (117) auch in Abhängigkeit von der Information über den Nutzer herzustellen.

## Claims

1. Appliance (100) for producing a food item (117), wherein the appliance (100) comprises
- a cultivation component (130) for cultivating and providing an edible cultivated ingredient (134), wherein the cultivation component (130) comprises a cultivation region (131), in which the cultivated ingredient (134) can grow, and comprises a harvesting module;
- means (103, 112) for providing an edible external ingredient (112), which is not cultivated in the appliance (100);
- processing means (104, 106, 107), which are designed to produce the food item (117) from at least one cultivated ingredient (134) and at least one external ingredient (112); and
- a control unit (120), which is designed
- to determine a recipe for producing the food item (117), wherein the recipe indicates ingredients (112, 134) and process steps for producing the food item (117);
- to control the harvesting module in order to remove a quantity of the cultivated ingredient (134) indicated in the recipe for producing the food item (117) from the cultivation region (131); and
- to prompt the processing means (104, 106, 107) to produce the food item (117) according to the recipe;
**characterised in that**
- the cultivation of the cultivated ingredient (134) takes place in or on a liquid medium and
- the harvesting module is designed to remove a mature portion of the cultivated ingredient (134) from the cultivation region (131), by filtering out fruit or plants of the cultivated ingredient from the liquid medium as a function of size.

2. Appliance (100) according to claim 1, wherein
- the cultivation component (130) comprises a light source (132), which is designed to provide light for photosynthesis of the cultivated ingredient (134) in the cultivation region (131); and/or
- the cultivation component (130) comprises a climate unit (133), which is designed to control and/or regulate a climate, in particular a temperature and/or gas composition, in the cultivation region (131).

3. Appliance (100) according to one of the preceding claims, wherein the cultivation component (130) comprises a nutrient source, in order to provide nutrients for the growth of the cultivated ingredient (134).

4. Appliance (100) according to one of the preceding claims, wherein the processing means (104, 106, 107) comprise a mixing unit (104), which is designed to produce an edible compressed mass (114) from the at least one cultivated ingredient (134) and the at least one external ingredient (112).

5. Appliance (100) according to claim 4, wherein the processing means (104, 106, 107) comprise a nozzle (106) to extrude the compressed mass (114).

6. Appliance (100) according to claim 5, wherein the nozzle (106) is movable and designed to expel the compressed mass (114) at different points to produce a spatial arrangement of compressed mass (114) for the food item (117).

7. Appliance (100) according to claim 6, wherein
- the recipe indicates one or more first points, at which compressed mass (114) should be arranged in the spatial arrangement of compressed mass (114) to produce the food item (117); and
- the control unit (120) is designed to prompt the movable nozzle (106) to expel the compressed mass (114) at the one or more first points in the spatial arrangement of compressed mass (114).

8. Appliance (100) according to one of claims 4 to 7, wherein the processing means (104, 106, 107) comprise a cooking unit (107), which is designed to cook the compressed mass (114) in order to produce the food item (117).

9. Appliance (100) according to one of the preceding claims, wherein
- the recipe indicates the required one or more cultivated ingredients (134) and the required one or more external ingredients (112) needed to produce the food item (117);
- the processing means (104, 106, 107) comprise measuring means for measuring out the quantity of a cultivated ingredient (134) and/or the quantity of an external ingredient (112); and
- the control unit (120) is designed to control the measuring means according to the recipe in order to produce the food item (117).

10. Appliance (100) according to one of the preceding claims, wherein
- the means (103, 112) for providing an edible external ingredient (112) comprise an interface (103) for holding a capsule; and
- the capsule contains at least one edible external ingredient (112).

11. Appliance (100) according to one of the preceding claims, wherein the means (103, 112) for providing an edible external ingredient (112) comprise a container (102) in the appliance (100) for holding an edible external ingredient (112).

12. Appliance (100) according to one of the preceding claims, wherein the cultivated ingredient (134) comprises khai-nam.

13. Appliance (100) according to one of the preceding claims, wherein the food item (117) can be more than 50%, in particular more than 80%, made up of one or more cultivated ingredients (134) cultivated in the appliance (100).

14. Appliance (100) according to one of the preceding claims, wherein
- the control unit (120) is designed to determine information about a user of the appliance (100);
- the information about the user in particular comprises information about a preference of the user, information about a nutrient requirement of the user and/or information about a nutrient recommendation for the user; and
- the control unit (120) is designed to prompt the processing means (104, 106, 107) also to produce the food item (117) as a function of the information about the user.

## Revendications

1. Appareil (100) destiné à la réalisation d'un aliment (117), l'appareil (100) comprenant :
- un composant de culture (130) destiné à la culture et à la préparation d'un ingrédient cultivé (134) comestible, le composant de culture (130) comprenant une zone de culture (131) dans laquelle l'ingrédient cultivé (134) peut croître, et un module de récolte ;
- des moyens (103, 112) destinés à la préparation d'un ingrédient externe (112) comestible, lequel n'est pas cultivé dans l'appareil (100) ;
- des moyens de transformation (104, 106, 107) qui sont conçus pour réaliser l'aliment (117) à partir d'au moins un ingrédient cultivé (134) et d'au moins un ingrédient externe (112) ; et
- une unité de commande (120) qui est configurée
- pour déterminer une recette pour la réalisation de l'aliment (117), la recette indiquant des ingrédients (112, 134) et des étapes de processus pour la réalisation de l'aliment (117) ;
- pour commander le module de récolte afin de prélever de la zone de culture (131) une quantité indiquée dans la recette de l'ingrédient cultivé (134) pour la réalisation de l'aliment (117) ; et
- pour inciter les moyens de transformation (104, 106, 107) à réaliser l'aliment (117) selon la recette ;
**caractérisé en ce que**
- la culture de l'ingrédient cultivé (134) est réalisée dans ou sur un milieu liquide, et
- **en ce que** le module de récolte est conçu pour prélever de la zone de culture (131) une proportion mature de l'ingrédient cultivé (134), du fait qu'il filtre du milieu liquide des fruits resp. des plantes de l'ingrédient cultivé en fonction de la taille.

2. Appareil (100) selon la revendication 1, dans lequel
- le composant de culture (130) comprend une source de lumière (132) qui est conçue pour fournir de la lumière pour la photosynthèse de l'ingrédient cultivé (134) dans la zone de culture (131) ; et/ou
- le composant de culture (130) comprend une unité climatique (133) qui est conçue pour commander et/ou régler un climat dans la zone de culture (131), notamment une température et/ou une composition d'un gaz.

3. Appareil (100) selon l'une quelconque des revendications précédentes, dans lequel le composant de culture (130) comprend une source nutritionnelle afin de fournir des nutriments pour la croissance de l'ingrédient cultivé (134).

4. Appareil (100) selon l'une quelconque des revendications précédentes, dans lequel les moyens de transformation (104, 106, 107) comprennent une unité de mélange (104) qui est conçue pour produire une masse pressée (114) comestible à partir de l'au moins un ingrédient cultivé (134) et de l'au moins un ingrédient externe (112).

5. Appareil (100) selon la revendication 4, dans lequel les moyens de transformation (104, 106, 107) comprennent une buse (106) afin d'extruder la masse pressée (114).

6. Appareil (100) selon la revendication 5, dans lequel la buse (106) est mobile et conçue pour déplacer la masse pressée (114) à différentes positions afin de réaliser une disposition spatiale de la masse pressée (114) pour l'aliment (117).

7. Appareil (100) selon la revendication 6, dans lequel
- la recette indique une ou plusieurs premières positions auxquelles la masse pressée (114) dans la disposition spatiale de la masse pressée (114) est à disposer pour la réalisation de l'aliment (117) ; et
- l'unité de commande (120) est configurée pour inciter la buse (106) mobile à déplacer la masse pressée (114) à la ou aux plusieurs premières positions dans la disposition spatiale de la masse pressée (114).

8. Appareil (100) selon l'une quelconque des revendications 4 à 7, dans lequel les moyens de transformation (104, 106, 107) comprennent une unité de cuisson (107) qui est conçue pour faire cuire la masse pressée (114) afin de réaliser l'aliment (117).

9. Appareil (100) selon l'une quelconque des revendications précédentes, dans lequel
- la recette indique un ou plusieurs ingrédients cultivés (134) indispensables et un ou plusieurs ingrédients externes (112) indispensables, lesquels sont nécessaires à la réalisation de l'aliment (117) ;
- les moyens de transformation (104, 106, 107) comprennent des moyens de dosage afin de doser la quantité d'un ingrédient cultivé (134) et/ou la quantité d'un ingrédient externe (112) ; et
- l'unité de commande (120) est configurée pour commander les moyens de dosage selon la recette afin de réaliser l'aliment (117).

10. Appareil (100) selon l'une quelconque des revendications précédentes, dans lequel
- les moyens (103, 112) destinés à la préparation d'un ingrédient externe (112) comestible comprennent une interface (103) pour le logement d'une capsule ; et
- la capsule comprend au moins un ingrédient externe (112) comestible.

11. Appareil (100) selon l'une quelconque des revendications précédentes, dans lequel les moyens (103, 112) destinés à la préparation d'un ingrédient externe (112) comestible comprennent un récipient (102) dans l'appareil (100) pour le logement d'un ingrédient externe (112) comestible.

12. Appareil (100) selon l'une quelconque des revendications précédentes, dans lequel l'ingrédient cultivé (134) comprend du khai-nam.

13. Appareil (100) selon l'une quelconque des revendications précédentes, dans lequel l'aliment (117) est constitué de plus de 50%, notamment de plus de 80%, d'un ou de plusieurs ingrédients cultivés (134) qui ont été cultivés dans l'appareil (100).

14. Appareil (100) selon l'une quelconque des revendications précédentes, dans lequel
- l'unité de commande (120) est configurée pour déterminer une information concernant un utilisateur de l'appareil (100) ;
- l'information concernant l'utilisateur comprend notamment une information concernant une préférence de l'utilisateur, une information concernant un besoin nutritionnel de l'utilisateur et/ou une information concernant une recommandation nutritionnelle pour l'utilisateur ; et
- l'unité de commande (120) est conçue pour inciter les moyens de transformation (104, 106, 107) à réaliser l'aliment (117) également en fonction de l'information concernant l'utilisateur.
